# EUROPEAN PATENT SPECIFICATION

(11) **EP 4 092 813 B1**
(45) Date of publication and mention of the grant of the patent: **02.09.2026**
(21) Application number: 21741235.2
(22) Date of filing: 13.01.2021
(51) Int. Cl.: H01M 10/613, H01M 10/617, H01M 10/625, H01M 10/647, H01M 10/6556, H01M 10/6568, H01M 50/20, F28D 1/053

(54) **COOLING HEAT EXCHANGER**
KÜHLWÄRMETAUSCHER
ÉCHANGEUR DE CHALEUR DE REFROIDISSEMENT

(30) Priority: 17.01.2020 JP 2020006054
(43) Date of publication of application: 23.11.2022
(73) Proprietor: Valeo Electrification, 95892 Cergy Pontoise (FR)
(72) Inventor: KURAHASHI, Kazuya, Kumagaya-shi Saitama 360-0193 (JP); WANG, Mingdi, Kumagaya-shi Saitama 360-0193 (JP)
(74) Representative: Valeo Powertrain Systems
(86) International application number: PCT/JP2021/000741
(87) International publication number: WO 2021/145317

(56) References cited:
- EP-A1- 2 383 779
- EP-A1- 2 985 561
- JP-A- 2011 049 139
- JP-A- 2012 190 675

## Description

### Technical Field

The present invention relates to a cooling heat exchanger for cooling high-temperature battery cells mounted in a vehicle.

### Background Art

An electric-powered vehicle or a hybrid vehicle travels by driving a travel motor using electric power accumulated in a rechargeable battery. Heat generated at a time of charging the battery contributes to degradation. To reduce the battery degradation, cooling of the battery is carried out. Patent Literature 1 discloses a refrigerant type cooling heat exchanger for cooling a battery.

The cooling heat exchanger of Patent Literature 1 includes a plurality of flat tubes (refrigerant pipes) provided between two headers (manifolds) and coming in contact with the battery. The headers are disposed to extend in a vertical direction and the tubes are thermally coupled with a side surface of the battery. That is, the tubes come in contact with the side surface of the battery to enable heat exchange. When the battery is to be cooled, refrigerants flowing in relatively upstream-side tubes in a refrigerant flow passage formed by the headers and the tubes are in a gas-liquid mixture state of sufficiently containing a liquid and have a sufficient battery cooling capacity. The refrigerants are heated by the heat of the battery when flowing in the tubes, whereby the refrigerants in a liquid state evaporate and decrease and a ratio of refrigerants in a gas state increases.

A battery module of Patent Literature 2 includes a plurality of batteries disposed in a battery pack case. The batteries are stacked in the vertical direction and a transverse direction and form groups, so that a plurality of groups are disposed in one battery pack case.

In a case of disposing the cooling heat exchanger of Patent Literature 1 in the battery pack case of Patent Literature 2 and cooling the battery groups, it is required to put some thought into designing a shape of the cooling heat exchanger. That is, while the two headers are used in the cooling heat exchanger of Patent Literature 1, it is preferable to increase the number of headers to three or more and dispose tubes between the adjacent headers. If the two headers are used without changing the number of headers and long tubes are brought into contact with each battery group, the tubes easily deform because of long dimensions, which makes it difficult to thermally couple the tubes with side surfaces of the batteries. To address the problem, the cooling heat exchanger is configured with three or more headers and an intermediate header is disposed between the battery groups, whereby it is possible to reduce an unintended deformation of the tubes and to form thermally coupling of the tubes with the side surface of each battery group.

### Prior Art Literature

### Patent Literatures

Patent Literature 1: JP-A-2016-035378
Patent Literature 2: JP-A-2015-072819

### Disclosure of the Invention

### Problem to be Solved by the Invention

However, in a case of providing the intermediate header, liquid refrigerants penetrating into this intermediate header at a relatively upper position tend to move to a relatively lower position by gravity. For this reason, the refrigerants in the gas-liquid mixture state flowing through interiors of the plurality of tubes change in a ratio of the gas-liquid mixture between an upstream side and a downstream side of the intermediate header, and only gas-phase refrigerants tend to gather in the upper tubes downstream of the intermediate header. That is, a ratio of the gas-phase refrigerants tends to increases in the upper tubes. In addition, as the ratio of the gas-phase refrigerants increases, then the battery cooling capacity becomes insufficient due to evaporation of the liquid-phase refrigerants, and concern arises that a battery temperature distribution cannot be kept uniform.

An object of the present invention is to reduce an increase in a ratio of gas-phase refrigerants and thereby keep uniformity of a battery temperature distribution in refrigerants flowing through upper tubes among a plurality of tubes disposed downstream of an intermediate header in a vertical direction in a battery cooling module including the intermediate header.

### Means for Solving the Problems

While reference signs in the accompanying drawings are added in parentheses for helping understand the present invention, the reference signs are not intended to limit the present invention to the embodiments in the drawings.

According to an embodiment of the present invention, there is provided a cooling heat exchanger (30; 30A; 30B) through which refrigerants in a gas-liquid mixture state flow and that cools battery cells (21) for a vehicle, including:
an inlet section (31) into which refrigerants to carry out heat exchange with the battery cells (21) flow;
an inlet header (H1) into which the refrigerants passing through the inlet portion (31) flow;
a first upper tube (Tal) into which a part of the refrigerants passing through the inlet header (H1) flow;
a first lower tube (Tb1) that is disposed downward of the first upper tube (Ta1) in a state in which the cooling heat exchanger is mounted in the vehicle, and into which a rest of the refrigerants passing through the inlet header (H1) flow;
an intermediate header (H2) into which the refrigerants passing through the first upper tube (Ta1) and the first lower tube (Tb1) flow;
a second upper tube (Ta2) into which the refrigerants passing through the intermediate header (H2) flow;
a second lower tube (Tb2) that is disposed downward of the second upper tube (Ta2) in the state in which the cooling heat exchanger is mounted in the vehicle, and into which the refrigerants passing through the intermediate header (H2) flow;
an outlet header (H4) into which the refrigerants passing through the second upper tube (Ta2) and the second lower tube (Tb2) flow either directly or indirectly;
an outlet section (32) into which the refrigerants passing through the outlet header (H4) flow and that discharges the refrigerants from the cooling heat exchanger (30; 30A; 30B); and
a partition member (S2) that partitions an interior of the intermediate header (H2) into an upper space (42a) communicating with the first upper tube (Ta1) and the second upper tube (Ta2) and a lower space (42b) communicating with the first lower tube (Tb1) and the second lower tube (Tb2).

Preferably, the cooling heat exchanger (30; 30A, 30B) includes:
a plurality of the intermediate headers (H2; H3), the plurality of intermediate headers being connected to each other via the upper tubes (Ta2; Ta3) and the lower tubes (Tb2; Tb3); and
a plurality of partition members (S2; S3) that each partition an interior of each of the plurality of intermediate headers (H2; H3) into an upper space (42a; 43a) communicating with one of the upper tubes (Ta2; Ta3) and a lower space communicating with one of the lower tubes (Tb2, Tb3). The refrigerants flowing from the inlet header into the upper tubes are prevented from a reduction in a ratio of liquid-phase refrigerants due to an influence of gravity in a path to the outlet header.

Preferably, in the cooling heat exchanger (30A),
the inlet header (H1) includes a squeeze member (S1) having a squeeze hole (S1a) at a smaller area than a cross-sectional area on a surface crossing a longitudinal direction of the inlet header (H1), and
the squeeze member (S1) partitions an interior of the inlet header (H1) into an upper space (41a) communicating with the first upper tube (Ta1) and a lower space (41b) communicating with the first lower tube (Tb1) while communicating the upper space (41a) with the lower space (41b). It is possible to increase a ratio at which gas-liquid mixture refrigerants flowing into the inlet header flow into the first upper tube and the first lower tube, and supply the refrigerants to the upper tubes and the lower tubes in a balanced manner.

### Effect of the Invention

According to the embodiment, it is possible to reduce an increase in a ratio of gas-phase refrigerants and thereby keep uniformity of a battery temperature distribution in refrigerants flowing through upper tubes among a plurality of tubes disposed downstream of an intermediate header in a vertical direction in a battery cooling module including the intermediate header.

### Brief Description of the Drawings

Fig. 1 is an exploded perspective view illustrating a cooling heat exchanger, a battery pack in which this heat exchanger is mounted, and a battery according to a first embodiment.
Fig. 2 is a schematic cross-sectional view of the cooling heat exchanger according to the first embodiment.
Fig. 3 is a schematic cross-sectional view illustrating a state in which refrigerants in a gas-liquid mixture state are caused to flow through an interior of the cooling heat exchanger to cool the battery.
Fig. 4 is a schematic cross-sectional view of a cooling heat exchanger according to a second embodiment.
Fig. 5 is a schematic cross-sectional view illustrating a cooling heat exchanger, a battery pack in which this heat exchanger is mounted, and a battery according to the other embodiment.

### Best Mode For Carrying Out The Invention

Embodiments of the present invention will be described hereinafter with reference to the accompanying drawings. In the drawings, Le denotes left, Ri denotes right, Up denotes up, and Dn denotes down.

### <First embodiment>

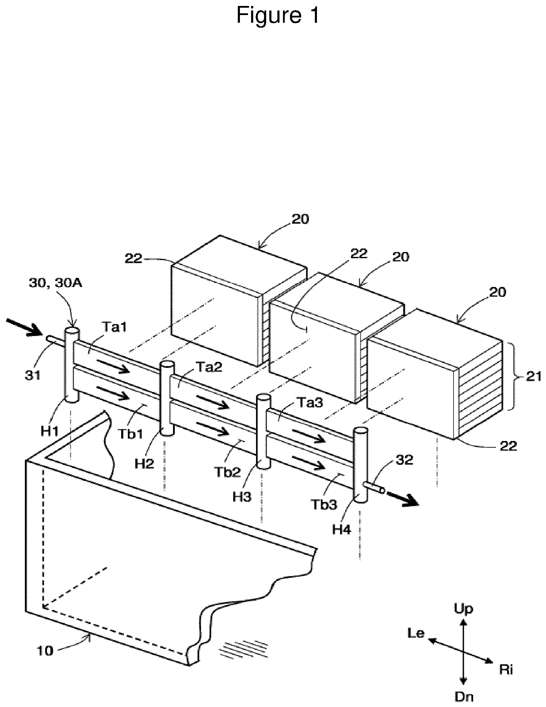

Reference is made to Fig. 1. Fig. 1 illustrates three battery stacked bodies 20 in which electric power is accumulated, a cooling heat exchanger 30 for cooling these battery stack bodies 20, and a battery pack case 10 that accommodates the battery stacked bodies 20 and the cooling heat exchanger 30. The battery pack case 10, the battery stacked bodies 20, and the cooling heat exchanger 30 are mounted in, for example, an electric-powered vehicle that travels by driving a travel motor using electric power or a hybrid vehicle having a power source formed from an internal combustion engine and a motor.

The battery pack case 10 is mounted in the vehicle and formed from a metal or a resin. While Fig. 1 illustrates the battery pack case 10 as a container that accommodates the battery stacked bodies 20 and the cooling heat exchanger 30 inside and that has an open top surface, the battery pack case 10 is normally formed as a hermetic container such that certain airtightness can be ensured in the battery pack case 10. Ensuring the airtightness enables battery cells 21 that are precision products to be isolated and protected from dust, water, fat, and the like coming flying from an outside world.

Each of the battery stacked bodies 20 includes a plurality of stacked battery cells 21 and a soaking layer 22 disposed on a surface opposed to the cooling heat exchanger 30. A stacking direction of the battery cells 21 is not limited to a vertical direction as illustrated in Fig. 1 and may be a transverse direction or a longitudinal direction (not illustrated). Providing the soaking layer 22 enables a reduction in variation of a temperature distribution of each of the battery cells 21. For example, a high thermal conductivity material such as an aluminum alloy or a stainless steel alloy is used for the soaking layer 22. The battery cells 21 have a function to accumulate electric power to be supplied to the motor for driving the vehicle (not illustrated), and generate heat and becomes hot when being charged. The soaking layer 22 of each battery stacked body 20 transfers the heat of the hot battery cells 21, which is thermally coupled with the cooling heat exchanger 30 and which becomes hot, to the cooling heat exchanger 30.

The cooling heat exchanger 30 is coupled to a refrigeration cycle, not illustrated, and disposed, in particular, downstream of an expanding device. When the refrigeration cycle operates, refrigerants in a gas-liquid mixture state that serve as cooling heating mediums flow through the cooling heat exchanger 30. Examples of the refrigerants to be used include fluorocarbon refrigerants (HFC-134a, R-1234yf, and R-12).

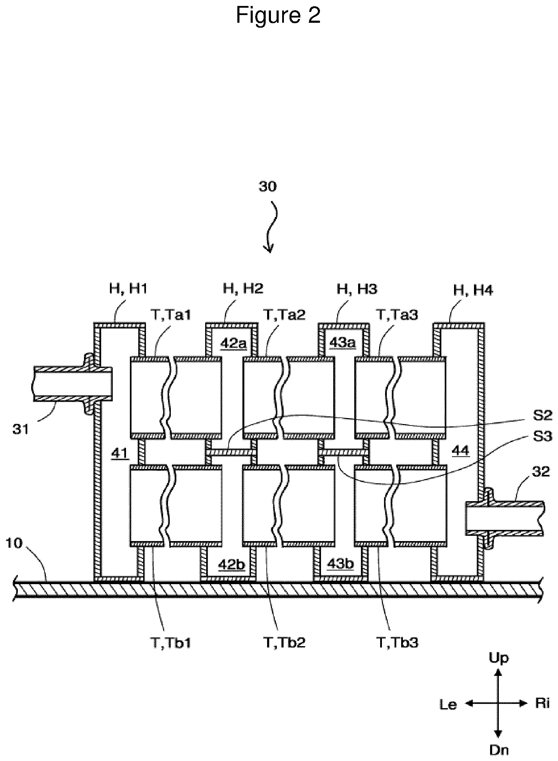

Reference is made to Fig. 2. The cooling heat exchanger 30 is formed from, for example, a high thermal conductivity material such as an aluminum alloy or a copper alloy. The cooling heat exchanger 30 includes four headers H (an inlet header H1, intermediate headers H2 and H3, and an outlet header H4) each formed into a cylindrical shape and extending vertically, heat exchange tubes T (upper tubes Ta1, Ta2, and Ta3 and lower tubes Tb1, Tb2, and Tb3)that is supported by the headers H and in which the refrigerants flow, an inlet section 31 that is connected to an upper portion of the inlet header H1 and into which the refrigerants flow, and an outlet section 32 that is connected to a lower portion of the outlet header H4 and that discharges the refrigerants. An interior of the intermediate header H2 is partitioned into an upper space 42a and a lower space 42b that is located below this upper space 42a by a partition member S2. An interior of the intermediate header H3 is partitioned into an upper space 43a and a lower space 43b that is located below this upper space 43a by a partition member S3.

The inlet section 31 has a cylindrical flange portion provided in a metal tube and inserted into a hole portion formed in the inlet header H1. A downstream end of the inlet section 31 opens to an internal space 41 of the inlet header H1.

The outlet section 32 has a cylindrical flange portion provided in a metal tube and inserted into a hole portion formed in the outlet header H4. An upstream end of the outlet section 32 opens to an internal space 44 of the outlet header H4.

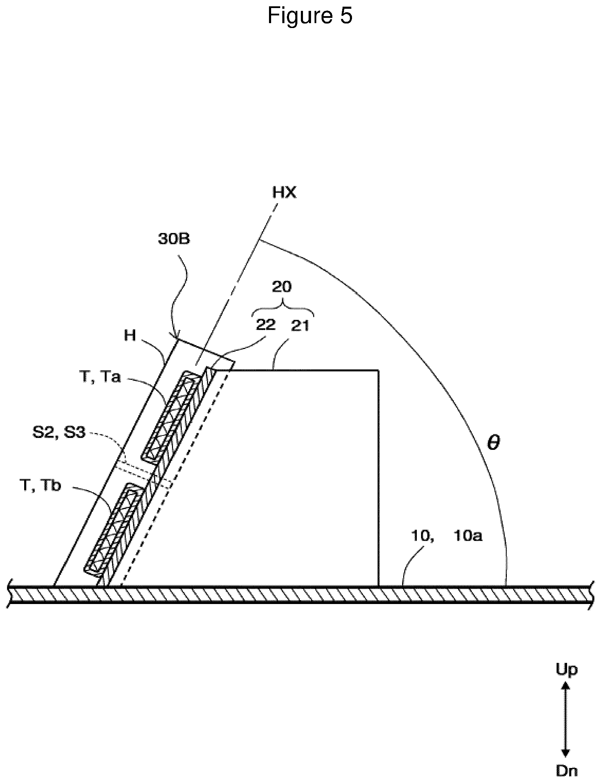

The heat exchange tubes T are flat cylindrical members and a plurality of walls can be formed in the heat exchange tubes T along a refrigerant flow direction (refer to Fig.5). In manufacturing, a manufacturing method such as extrusion, lamination of two tube plates, and reel forming of one tube plate is used. The first upper tube Ta1 communicates the internal space 41 of the inlet header H1 with the upper space 42a of the intermediate header H2. The first lower tube Tb1 communicates the internal space 41 of the inlet header H1 with the lower space 42b of the intermediate header H2. The second upper tube Ta2 communicates the upper space 42a of the intermediate header H2 with the upper space 43a of the intermediate header H3. The second lower tube Tb2 communicates the lower space 42b of the intermediate header H2 with the lower space 43b of the intermediate header H3. The third upper tube Ta3 communicates the upper space 43a of the intermediate header H3 with the internal space 44 of the outlet header H4. The third lower tube Tb3 communicates the lower space 43b of the intermediate header H3 with the internal space 44 of the outlet header H4.

The four headers H1, h2, H3, and H4 include the inlet header H1 in which the inlet section 31 is disposed, the intermediate header H2 that is disposed downstream of the inlet header H1 and with which the first upper tube Ta1 and the first lower tube Tb1 are coupled, the intermediate header H3 that is disposed downstream of the intermediate header H2 and with which the second upper tube Ta2 and the second lower tube Tb2 are coupled, and the outlet header H4 that is disposed downstream of the intermediate header H3 and with which the third upper tube Ta3 and the third lower tube Tb3 are coupled. While Figs. 1 to 3 illustrate that the four headers H1, H2, H3, and H4 are all equal in length dimensions, the present invention is not limited to this. For example, when the plurality of battery stacked bodies 20 differ in height dimensions, height dimensions of the headers H1, H2, H3, and H4 may be changed as appropriate. Furthermore, vertical positions of the upper tubes Ta and the lower tubes Tb may be changed as appropriate. By avoiding local cooling or cooling of the battery stacked bodies 20 at uneven positions, it is possible to maintain the battery stacked bodies 20 in a uniform temperature state.

The cooling heat exchanger 30 is preferably formed by integrally bonding the four headers H, the eight heat exchange tubes T, the inlet section 31, the outlet section 32, and the partition members S2 and S3 by brazing. High rigidity of the cooling heat exchanger 30 can be thereby ensured.

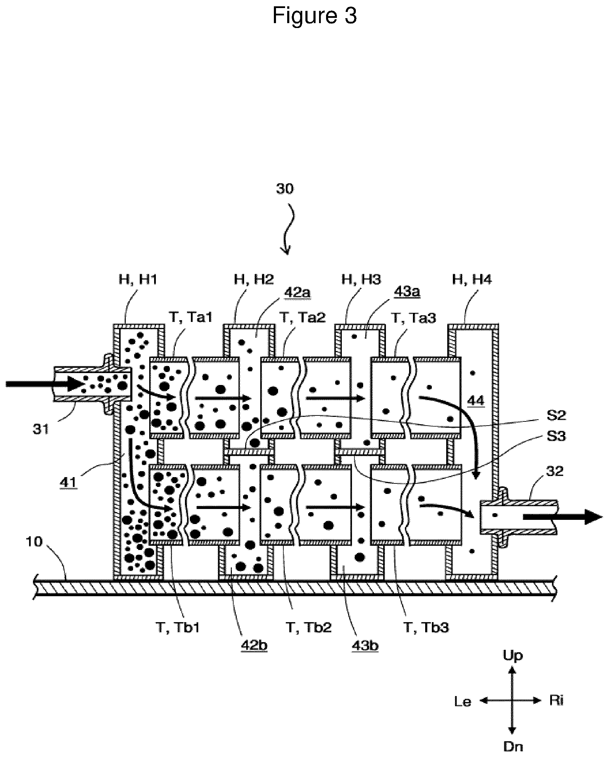

Reference is made to Figs. 1 and 3. In Figs. 1 and 3, arrows indicate a flow direction and a flow volume of the refrigerants and black circles each indicate a liquid refrigerant.

Gas-liquid mixture refrigerants flowing through the inlet section 31 and flowing into the inlet header H1 branch off in the internal space 41 of the inlet header H1 generally vertically, and a part of the refrigerants flow into the first upper tube Ta1 while a rest thereof flow into the first lower tube Tb1. The refrigerants flowing in the first upper tube Ta1 and the first lower tube Tb1 carry out heat exchange with the battery cells 21 via the soaking layers 21. The refrigerants flowing out of the first upper tube Ta1 flow into the upper space 42a of the intermediate header H2. The refrigerants flowing out of the first lower tube Tb1 flow into the lower space 42b of the intermediate header H2.

The gas-liquid mixture refrigerants flowing into the upper space 42a of the intermediate header H2 flow into the second upper tube Ta2. The gas-liquid mixture refrigerants flowing into the lower space 42b of the intermediate header H2 flow into the second lower tube Tb2. The refrigerants flowing in the second upper tube Ta2 and the second lower tube Tb2 carry out heat exchange with the battery cells 21 via the soaking layers 21. The refrigerants flowing out of the second upper tube Ta2 flow into the upper space 43a of the intermediate header H3. The refrigerants flowing out of the second lower tube Tb2 flow into the lower space 43b of the intermediate header H3.

The gas-liquid mixture refrigerants flowing into the upper space 43a of the intermediate header H3 flow into the third upper tube Ta3. The gas-liquid mixture refrigerants flowing into the lower space 43b of the intermediate header H3 flow into the third lower tube Tb3. The refrigerants flowing in the third upper tube Ta3 and the third lower tube Tb3 carry out heat exchange with the battery cells 21 via the soaking layers 21. The refrigerants flowing out from the third upper tube Ta3 flow into the internal space 44 of the outlet header H4. The refrigerants flowing out from the third lower tube Tb3 flow into the internal space 44 of the outlet header H4.

The refrigerants flowing from the third upper tube Ta3 into the outlet header H4 merge with the refrigerants flowing from the third lower tube Tb3 into the outlet header in the internal space 44 of the outlet header H4, and then flow into the refrigeration cycle, not illustrated, via the outlet section 32.

The refrigerants flowing into the inlet header H1 are in a gas-liquid mixture state in which a ratio of liquid-phase refrigerants is relatively high. The liquid-phase refrigerants are higher in relative density than gas-phase refrigerants. For this reason, the liquid-phase refrigerants higher in mass tend to move downward due to an influence of gravity, as illustrated in Fig. 3.

The refrigerants flowing into the intermediate header H2 are in the gas-liquid mixture state in which the ratio of the liquid-phase refrigerants decrease to be lower the ratio in the refrigerants flowing through the inlet header H1. This is because the refrigerants absorb the heat of the battery cells 21 at a time of flowing through the first upper tube Ta1 and the first lower tube Tb1 and a part of the liquid-phase refrigerants evaporate and transform into the gas-phase refrigerants. However, the refrigerants flowing into the intermediate header H2 are still in the gas-liquid mixture state. That is, the refrigerants have humidity wetness to a certain extent. For this reason, the liquid-phase refrigerants higher in mass also tend to move downward due to the influence of the gravity in the intermediate header H2, as illustrated in Fig. 3.

The refrigerants flowing into the intermediate header H3 are in the gas-liquid mixture state in which the ratio of the liquid-phase refrigerants further decreases to be lower the ratio in the refrigerants flowing through the intermediate header H2. This is because the refrigerants absorb the heat of the battery cells 21 at a time of flowing through the second upper tube Ta2 and the second lower tube Tb2 and a part of the liquid-phase refrigerants evaporate and transform into the gas-phase refrigerants. However, the refrigerants flowing into the intermediate header H3 are still in the gas-liquid mixture state. That is, the refrigerants have humidity wetness to a certain extent. For this reason, the liquid-phase refrigerants higher in mass also tend to move downward due to the influence of the gravity in the intermediate header H3, as illustrated in Fig. 3.

The refrigerants flowing into the outlet header H4 are in the gas-liquid mixture state in which the ratio of the liquid-phase refrigerants further decreases to be lower than the ratio in the refrigerants flowing through the intermediate header H3. This is because the refrigerants absorb the heat of the battery cells 21 at a time of flowing through the third upper tube Ta3 and the third lower tube Tb3 and a part of the liquid-phase refrigerants evaporate and transform into the gas-phase refrigerants. The refrigerants flowing into the outlet header H4 are in a state in which the refrigerants hardly contain the liquid-phase refrigerants as illustrated in Fig. 3 or are in a completely gas-phase state (not illustrated). That is, the humidity wetness is nearly zero.

Here, the partition member S2 is provided in the intermediate header H2 and completely partitions the upper space 42a from the lower space 42b. As a result, the refrigerants flowing through above the partition member S2 among the refrigerants in the gas-liquid mixture state flowing into the intermediate header H2 do not move below the partition member S2 even if the liquid-phase refrigerants move downward in the intermediate header H2 due to the influence of the gravity. For this reason, the ratio of the liquid-phase refrigerants flowing through the second upper tube Ta2 that is coupled with an upper portion of the intermediate header H2 and into which the refrigerants flow from the intermediate header H2 is ensured to a certain extent. That is, an increase in the ratio of the gas-phase refrigerants is reduced.

Likewise, the partition member S3 is provided in the intermediate header H3 and completely partitions the upper space 43a from the lower space 43b. In addition, the refrigerants flowing through above the partition member S3 among the refrigerants in the gas-liquid mixture state flowing into the intermediate header H3 do not move below the partition member S3 even if the liquid-phase refrigerants move downward in the intermediate header H3 due to the influence of the gravity. For this reason, the ratio of the liquid-phase refrigerants flowing through the third upper tube Ta3 that is coupled with an upper portion of the intermediate header H3 and into which the refrigerants flow from the intermediate header H3 is ensured to a certain extent. That is, an increase in the ratio of the gas-phase refrigerants is reduced.

Furthermore, it is possible to reduce a reduction in the cooling capacity of the battery cells 21 in the upper tube (second upper tube Ta2) out of the plurality of tubes coupled with a downstream side of the intermediate header H2 and the upper tube (third upper tube Ta3) out of the plurality of tubes coupled with a downstream side of the intermediate header H3, and to maintain uniformity of the temperature distribution of the battery stacked bodies 20.

### <Second embodiment>

A cooling heat exchanger 30A according to a second embodiment will next be described with reference to the drawings.

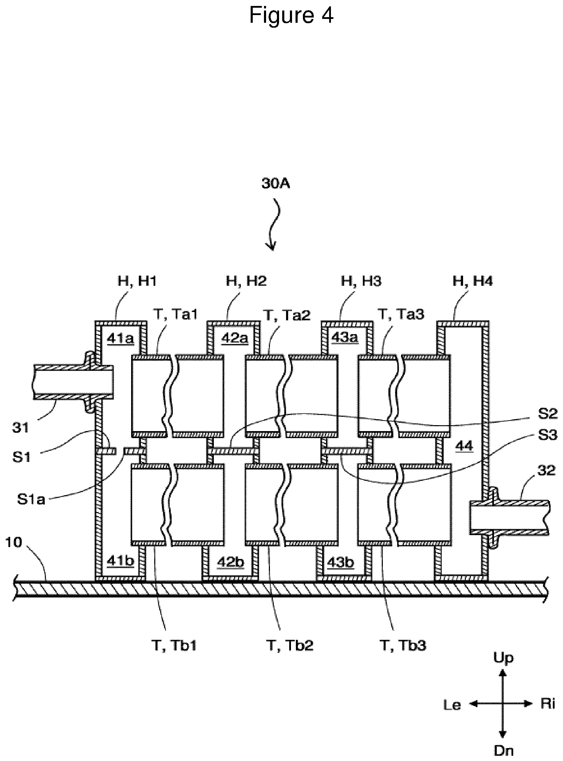

Reference is made to Fig. 4. The cooling heat exchanger 30A according to the second embodiment is disposed in a battery pack case 10A, and common elements to those in the cooling heat exchanger 30 according to the first embodiment are denoted by the same reference signs and will not be described in detail.

The cooling heat exchanger 30A cools the battery stacked bodies 20 and differs from the cooling heat exchanger 30 according to the first embodiment in that a squeeze member S1 is provided in the inlet header H1.

The cooling heat exchanger 30A is preferably formed by integrally bonding the four headers H, the eight heat exchange tubes T, the inlet section 31, the outlet section 32, the partition members S2 and S3, and the squeeze member S1 by brazing. High rigidity of the cooling heat exchanger 30A can be thereby ensured.

An interior of the inlet header H1 is partitioned into an upper space 41a and a lower space 41b by the squeeze member S1. A squeeze hole S1a is formed in the squeeze member S1. An area of the squeeze hole S1a is smaller than a cross-sectional area of the internal space along a direction orthogonal to the longitudinal direction of the inlet header H1. The interior of the inlet header H1 is partitioned into the upper space 41a and the lower space 41b, while the squeeze hole S1a brings the upper space 41a into communication with the lower space 41b.

The first upper tube Ta1 communicates the upper space 41a of the inlet header H1 with the upper space 42a of the intermediate header H2. The first lower tube Tb1 communicates the lower space 41b of the inlet header H1 with the lower space 42b of the intermediate header H2.

The inlet section 31 has the cylindrical flange portion provided in the metal tube and inserted into the hole portion formed in the inlet header H1. The downstream end of the inlet section 31 opens to the upper space 41a of the inlet header H1.

A flow of refrigerants for the cooling heat exchanger 30A will be described.

The inlet section 31 is attached to the inlet header H1 at a position above the squeeze member S1. The gas-liquid mixture refrigerants flowing through the inlet section 31 flow into the upper space 41a of the inlet header H1. The liquid-phase refrigerants relatively high in relative density move downward of the upper space 41a due to the influence of the gravity and gather near the squeeze member S1. A part of the refrigerants arriving at the squeeze member S1 pass through the squeeze hole S1a and move into the lower space 41b. The refrigerants that do not pass through the squeeze hole S1a flow into the first upper tube Ta1.

The refrigerants flowing into the upper space 41a are discharged by passing through either the first upper tube Ta1 or the squeeze hole S1a. A passage resistance of a path passing through the upper tubes Ta1, Ta2, and Ta3 (passage resistance of the upper tubes) relatively decreases with respect to a passage resistance of a path passing through the lower tubes Tb1, Tb2, and Tb3 (passage resistance of the lower tubes) by providing the squeeze member S1. For this reason, a ratio of the refrigerants passing through the upper tubes Ta1, Ta2, and Ta3 can be increased. In addition, by adjusting the area of the squeeze hole S1a, it is possible to increase the ratio of the refrigerants passing through the upper tubes Ta1, Ta2, and Ta3 to a desired degree and supply the refrigerants to the upper tubes Ta1, Ta2, and Ta3 and the lower tubes Tb1, Tb2, and Tb3 in a balanced manner. Furthermore, it is possible to make a temperature distribution of the cooling heat exchanger 30A uniform.

### <Other embodiment>

While the cooling heat exchangers 30 and 30A are described in the first and second embodiments, the present invention is not limited to the first and second embodiments as long as operations and effects of the present invention can be exhibited. For example, it has been described that the number of intermediate headers is two, the number of intermediate headers may be one or may be three or more. When the number of intermediate headers is one, the refrigerants passing through the second upper tube Ta2 and the second lower tube Tb2 directly flow into the outlet header (H4). When the number of intermediate headers is two or more, the refrigerants passing through the second upper tube Ta2 and the second lower tube Tb2 indirectly flow into the outlet header(H4).

Moreover, in a case where the cooling heat exchanger includes two or more intermediate headers, it is preferable that partition members are provided in all the intermediate headers. However, the cooling heat exchanger of the present invention include the other aspect. In that case, the cooling heat exchanger including the two intermediate headers is preferably configured such that the partition member S2 is provided in the most upstream intermediate header H2. The refrigerants flowing into the most upstream intermediate header H2 among the plurality of intermediate headers are higher in the ratio of the liquid-phase refrigerants than the refrigerants flowing into the intermediate header H3 disposed downstream, and the liquid-phase refrigerants tend to move downward due to the influence of the gravity. Here, by providing the partition member S2 in the most upstream intermediate header H2, it is possible to effectively prevent the reduction in the ratio of the liquid-phase refrigerants flowing into the second upper tube Ta2.

Moreover, a plurality of squeeze holes S1a may be provided in the squeeze member S1. A shape of each squeeze hole S1a is selected from among a circular shape, an elliptical shape, and the like, as appropriate.

Furthermore, a posture of each of cooling heat exchangers 30, 30A, and 30B is not limited to an aspect such that the headers H stand upright. The cooling heat exchanger 30B may be entirely disposed inclined toward the battery stacked bodies 20 while the upper tubes Ta are located above the lower tubes Tb. Reference is made to Fig. 5. The cooling heat exchanger 30B stands in such a manner that an extension axis HX of the headers H has an angle θ with respect to a bottom surface 10a of the battery pack case 10. The upper tubes Ta and the lower tubes Tb come in surface contact with the soaking layers 22 of the battery stacked bodies 20. At this time, the elements are preferably assembled into the cooling heat exchanger 30B at the angle θ in a range from 70 degrees to 110 degrees in light of shapes of the battery stacked bodies 20 and the effects of the present invention.

### Industrial Applicability

A battery cooling device according to the present invention is suited for being mounted in an electric-powered vehicle or a hybrid vehicle.

### Description of Reference Signs

10: Battery pack case
10a: Bottom surface
20: Battery stacked body
21: Battery cell
22: Soaking layer
30, 30A, 30B: Cooling heat exchanger
31: Inlet section
32: Outlet section
41: Internal space
41a: Upper space
42b: Lower space
42a: Upper space
42b: Lower space
43a: Upper space
43b: Lower space
44: Internal space
H: Header
H1: Inlet header
H2: Intermediate header
H3: Intermediate header
H4: Outlet header
T: Heat exchange tube
Ta1: First upper tube
Ta2: Second upper tube
Ta3: Third upper tube
Tb1: First lower tube
Tb2: Second lower tube
Tb3: Third lower tube
S1: Squeeze member
S1a: Squeeze hole
S2: Partition member
S3: Partition member
θ: Angle of extension axis of header with respect to bottom surface

## Claims

1. A cooling heat exchanger (30; 30A; 30B) through which refrigerants in a gas-liquid mixture state flow and that cools battery cells (21) for a vehicle, comprising:
an inlet section (31) into which refrigerants to carry out heat exchange with the battery cells (21) flow;
an inlet header (H1) into which the refrigerants passing through the inlet portion (31) flow;
a first upper tube (Ta1) into which a part of the refrigerants passing through the inlet header (H1) flow;
a first lower tube (Tb1) that is disposed downward of the first upper tube (Ta1) in a state in which the cooling heat exchanger is mounted in the vehicle, and into which a rest of the refrigerants passing through the inlet header (H1) flow;
an intermediate header (H2) into which the refrigerants passing through the first upper tube (Ta1) and the first lower tube (Tb1) flow;
a second upper tube (Ta2) into which the refrigerants passing through the intermediate header (H2) flow;
a second lower tube (Tb2) that is disposed downward of the second upper tube (Ta2) in the state in which the cooling heat exchanger is mounted in the vehicle, and into which the refrigerants passing through the intermediate header (H2) flow;
an outlet header (H4) into which the refrigerants passing through the second upper tube (Ta2) and the second lower tube (Tb2) flow either directly or indirectly;
an outlet section (32) into which the refrigerants passing through the outlet header (H4) flow and that discharges the refrigerants from the cooling heat exchanger (30; 30A; 30B); and
a partition member (S2) that partitions an interior of the intermediate header (H2) into an upper space (42a) communicating with the first upper tube (Ta1) and the second upper tube (Ta2) and a lower space (42b) communicating with the first lower tube (Tb1) and the second lower tube (Tb2).

2. The cooling heat exchanger (30; 30A; 30B) according to claim 1, comprising:
a plurality of the intermediate headers (H2; H3), the plurality of intermediate headers being connected to each other via the upper tubes (Ta2; Ta3) and the lower tubes (Tb2; Tb3); and
a plurality of partition members (S2; S3) that each partition an interior of each of the plurality of intermediate headers (H2; H3) into an upper space (42a; 43a) communicating with one of the upper tubes (Ta2; Ta3) and a lower space (42b; 43b) communicating with one of the lower tubes (Tb2, Tb3).

3. The cooling heat exchanger (30A) according to claim 1 or 2, wherein
the inlet header (H1) includes a squeeze member (S1) having a squeeze hole (S1a) at a smaller area than a cross-sectional area on a surface crossing a longitudinal direction of the inlet header (H1), and
the squeeze member (S1) partitions an interior of the inlet header (H1) into an upper space (41a) communicating with the first upper tube (Ta1) and a lower space (41b) communicating with the first lower tube (Tb1), while communicating the upper space (41a) with the lower space (41b) .

## Patentansprüche

1. Ein Kühlwärmetauscher (30; 30A; 30B), durch den Kältemittel in einem Gas-Flüssigkeits-Gemischzustand fließen und der Batteriezellen (21) für ein Fahrzeug kühlt, umfassend:
einen Einlassabschnitt (31), in den Kältemittel zum Wärmeaustausch mit den Batteriezellen (21) fließen;
einen Einlassverteiler (H1), in den die durch den Einlassabschnitt (31) fließenden Kältemittel strömen;
ein erstes oberes Rohr (Ta1), in das ein Teil der durch den Einlassverteiler (H1) fließenden Kältemittel strömt;
ein erstes unteres Rohr (Tb1), das unterhalb des ersten oberen Rohrs (Ta1) in einem Zustand angeordnet ist, in dem der Kühlwärmetauscher im Fahrzeug montiert ist, und in das der Rest der durch den Einlassverteiler (H1) fließenden Kältemittel strömt;
einen Zwischenverteiler (H2), in den die durch das erste obere Rohr (Ta1) und das erste untere Rohr (Tb1) fließenden Kältemittel strömen;
ein zweites oberes Rohr (Ta2), in das die durch den Zwischenverteiler (H2) fließenden Kältemittel strömen;
ein zweites unteres Rohr (Tb2), das unterhalb des zweiten oberen Rohrs (Ta2) in dem Zustand angeordnet ist, in dem der Kühlwärmetauscher im Fahrzeug montiert ist, und in das die durch den Zwischenverteiler (H2) fließenden Kältemittel strömen;
einen Auslassverteiler (H4), in den die durch das zweite obere Rohr (Ta2) und das zweite untere Rohr (Tb2) fließenden Kältemittel direkt oder indirekt strömen;
einen Auslassabschnitt (32), in den die durch den Auslassverteiler (H4) fließenden Kältemittel strömen und der die Kältemittel aus dem Kühlwärmetauscher (30; 30A; 30B) abführt; und
ein Trennelement (S2), das das Innere des Zwischenverteilers (H2) in einen oberen Raum (42a), der mit dem ersten oberen Rohr (Ta1) und dem zweiten oberen Rohr (Ta2) kommuniziert, und einen unteren Raum (42b), der mit dem ersten unteren Rohr (Tb1) und dem zweiten unteren Rohr (Tb2) kommuniziert, unterteilt.

2. Der Kühlwärmetauscher (30; 30A; 30B) nach Anspruch 1, umfassend:
eine Mehrzahl der Zwischenverteiler (H2; H3), wobei die Mehrzahl der Zwischenverteiler über die oberen Rohre (Ta2; Ta3) und die unteren Rohre (Tb2; Tb3) miteinander verbunden sind; und
eine Mehrzahl von Trennelementen (S2; S3), die jeweils das Innere jedes der Mehrzahl von Zwischenverteilern (H2; H3) in einen oberen Raum (42a; 43a), der mit einem der oberen Rohre (Ta2; Ta3) kommuniziert, und einen unteren Raum (42b; 43b), der mit einem der unteren Rohre (Tb2, Tb3) kommuniziert, unterteilen.

3. Der Kühlwärmetauscher (30A) nach Anspruch 1 oder 2, wobei
der Einlassverteiler (H1) ein Quetschelement (S1) mit einem Quetschloch (S1a) mit einer kleineren Fläche als einer Querschnittsfläche auf einer Oberfläche, die eine Längsrichtung des Einlassverteilers (H1) kreuzt, umfasst, und
das Quetschelement (S1) das Innere des Einlassverteilers (H1) in einen oberen Raum (41a), der mit dem ersten oberen Rohr (Ta1) kommuniziert, und einen unteren Raum (41b), der mit dem ersten unteren Rohr (Tb1) kommuniziert, unterteilt, während es den oberen Raum (41a) mit dem unteren Raum (41b) verbindet.

## Revendications

1. Echangeur de chaleur de refroidissement (30 ; 30A ; 30B) à travers lequel circulent des réfrigérants dans un état de mélange gaz-liquide et qui refroidit des cellules de batterie (21) pour un véhicule, comprenant :
une section d'entrée (31) dans laquelle circulent des réfrigérants pour effectuer un échange de chaleur avec les cellules de batterie (21) ;
un collecteur d'entrée (H1) dans lequel circulent les réfrigérants passant par la portion d'entrée (31) ;
un premier tube supérieur (Ta1) dans lequel circule une partie des réfrigérants passant par le collecteur d'entrée (H1) ;
un premier tube inférieur (Tb1) qui est disposé en dessous du premier tube supérieur (Ta1) dans un état où l'échangeur de chaleur de refroidissement est monté dans le véhicule, et dans lequel circule le reste des réfrigérants passant par le collecteur d'entrée (H1) ;
un collecteur intermédiaire (H2) dans lequel circulent les réfrigérants passant par le premier tube supérieur (Ta1) et le premier tube inférieur (Tb1) ;
un deuxième tube supérieur (Ta2) dans lequel circulent les réfrigérants passant par le collecteur intermédiaire (H2) ;
un deuxième tube inférieur (Tb2) qui est disposé en dessous du deuxième tube supérieur (Ta2) dans l'état où l'échangeur de chaleur de refroidissement est monté dans le véhicule, et dans lequel circulent les réfrigérants passant par le collecteur intermédiaire (H2) ;
un collecteur de sortie (H4) dans lequel circulent les réfrigérants passant par le deuxième tube supérieur (Ta2) et le deuxième tube inférieur (Tb2) soit directement soit indirectement ;
une section de sortie (32) dans laquelle circulent les réfrigérants passant par le collecteur de sortie (H4) et qui évacue les réfrigérants de l'échangeur de chaleur de refroidissement (30 ; 30A ; 30B) ; et
un élément de séparation (S2) qui divise l'intérieur du collecteur intermédiaire (H2) en un espace supérieur (42a) communiquant avec le premier tube supérieur (Ta1) et le deuxième tube supérieur (Ta2) et un espace inférieur (42b) communiquant avec le premier tube inférieur (Tb1) et le deuxième tube inférieur (Tb2).

2. Echangeur de chaleur de refroidissement (30 ; 30A ; 30B) selon la revendication 1, comprenant :
une pluralité des collecteurs intermédiaires (H2 ; H3), la pluralité de collecteurs intermédiaires étant reliés les uns aux autres via les tubes supérieurs (Ta2 ; Ta3) et les tubes inférieurs (Tb2 ; Tb3) ; et
une pluralité d'éléments de séparation (S2 ; S3) qui divisent chacun l'intérieur de chacun de la pluralité de collecteurs intermédiaires (H2 ; H3) en un espace supérieur (42a ; 43a) communiquant avec l'un des tubes supérieurs (Ta2 ; Ta3) et un espace inférieur (42b ; 43b) communiquant avec l'un des tubes inférieurs (Tb2, Tb3).

3. Echangeur de chaleur de refroidissement (30A) selon la revendication 1 ou 2, dans lequel
le collecteur d'entrée (H1) comprend un élément de compression (S1) ayant un trou de compression (S1a) d'une surface plus petite que la surface de section transversale sur une surface traversant la direction longitudinale du collecteur d'entrée (H1), et
l'élément de compression (S1) divise l'intérieur du collecteur d'entrée (H1) en un espace supérieur (41a) communiquant avec le premier tube supérieur (Ta1) et un espace inférieur (41b) communiquant avec le premier tube inférieur (Tb1), tout en faisant communiquer l'espace supérieur (41a) avec l'espace inférieur (41b).
